# EUROPEAN PATENT APPLICATION

(11) **EP 3 251 907 A1**
(43) Date of publication of application: **06.12.2017**
(21) Application number: 17173357.9
(22) Date of filing: 30.05.2017
(51) Int. Cl.: B60T 17/08, B60T 13/38

(54) **A SPRING BRAKE ACTUATOR WITH A DISC SPRING MADE OF COMPOSITE PLASTIC**

(30) Priority: 31.05.2016 TR 201607266
(71) Applicant: Arfesan Arkan Fren Elemanlari Sanayi Ve Ticaret A.S., 41480 Kocaeli (TR)
(72) Inventor: ARKAN, Fuat Burtan, 41480 Kocaeli (TR); KORKMAZ, Arif, 41480 Kocaeli (TR); KULAC, Omer Faruk, 41480 Kocaeli (TR)
(74) Representative: Karaahmet, Erdogan

(57) **Abstract**

The present invention relates to a spring brake actuator (1) with disc springs made of composite plastic which is used in the air brake systems which are present in heavy commercial vehicles such as buses, trucks, trailers, and tow trucks and wherein disc springs produced of composite plastic material are used and thus, the breakage and premature exposure of the power spring to corrosive effects are prevented.

## Description

### Field of the Invention

The present invention relates to a spring brake actuator with a disc spring made of composite plastic, whereby the power spring is produced of composite plastic and with disc springs in spring brake actuators comprising a power spring and used in air brake systems which are present in heavy commercial vehicles such as buses, trucks, trailers, and tow trucks.

### Background of the Invention(Prior Art)

The present invention consists of spring brake actuators used in heavy commercial vehicles such as trucks, tow trucks, trailers, and buses; a service portion which is active under normal driving conditions; and a spring portion which is activated in case of an air leakage or air discharge (pulling the handbrake). While the service portion functions in cases when the vehicle is desired to be slowed down or stopped, the spring portion functions when the vehicle is desired to be immobilized. In other words, the service portion functions upon applying a force on the foot brake of the vehicle; on the other hand, the spring portion functions upon applying a force on the handbrake. The power spring is compressed by the air delivered to the spring chamber. The power spring is released when the air within the spring chamber is discharged, thereby providing the force required for braking. Air brake actuators are classified into two main types: service brake actuators and spring brake actuators. As for the present invention, it is related to spring brake actuators.

Steel helical springs are used as power springs within spring brake actuators comprising a power spring and used in air brake systems which are present in heavy commercial vehicles such as buses, trucks, trailers, and tow trucks. When the vehicle is in driving position, the power spring is loaded by the force of the compressed air in the spring chamber. When the vehicle is desired to be taken to the parking position and to be immobilized, or in case of an air leakage due to any reason, the compressed air in the spring chamber is discharged, and thus braking occurs with the force on the power spring being released.

The brake actuators used today are brake elements that are exposed to the corrosive effects of the outer environment. Particularly, the steel materials are required to undergo coating-dyeing operations in order to be protected against corrosive effects. In the state of the art, helical power springs made of steel exist and they are actively used. Said helical power springs made of steel are required to be dyed in order to be protected against corrosive effects. However, during the functioning of the helical power spring made of steel, the dye layer, which protects against corrosive factors, is deformed due to the contact of the spring coils with one another or unwanted contact of the same with other components depending on the number of cycles, thereby making the spring exposed to corrosion. And when the power spring is subject to corrosion, the problems of breakage before reaching the predicted number of cycles and failure to perform its function may be experienced. The breakage of the power spring before reaching the predicted cycle life, in turn, causes the spring portion of the spring brake actuators, which has a vital importance, to lose its function. The operations and designs which are implemented in order to ensure that the power spring, which is one of the most crucial parts of the spring brake actuator, is not subject to corrosion; that the coils thereof do not contact with one another; and that said coils do not contact with other metal components, are very difficult and costly. Such designs become more challenging with the variations resulting from the manufacturing method of the steel helical power springs and with the unforeseeable variations (lateral loads, spring coefficient, force, collapse, etc.) in the performance parameters experienced in time.

In the state of the art, the U.S. Patent No. US 3647030 present an exemplary application regarding the subject matter. The patent application document refers to a spring-supported disc brake used in vehicles. This patent document discloses a method applied to metal discs with hydraulic pressure, wherein it is used as an overall brake mechanism for vehicles.

When the documents in the state of the art and the existing applications are taken into consideration, it will be understood that there exist no applications like the present invention which discloses a spring brake actuator with a disc springs made of composite plastic, wherein disc springs produced of composite plastic material are used and thus, the breakage and premature exposure of the power spring to corrosive effects are prevented.

### Summary and Objects of the Invention

The present invention, with a view to overcome the aforementioned disadvantages and provide additional advantages in the related technical field, relates to a spring brake actuator with a disc springs made of composite plastic.

The object of the invention is to provide a novel spring brake actuator with a disc springs which is made of composite plastic which remains unaffected by corrosive effects, instead of steel, whereby the problem of premature breakage of the power spring due to corrosive effects is overcome by way of using disc springs made of composite plastic material rather than the steel helical springs which are used in spring brake actuators of the prior art.

Another object of the invention is to use disc springs instead of helical springs in order to avoid performance variations (lateral loads, spring coefficient, force, collapse, etc.) which are unforeseeable and experienced in time as a result of the designs of the helical springs used in the state of the art.

Still another object of the invention is to reduce the costs resulting from the protective dyeing operations which are performed in order to prevent the helical power spring from being exposed to corrosive effects, and from the designing steps which are performed such that the coils of the helical springs will not contact and at the same time the unwanted contact thereof with other components will be avoided.

Another object of the invention is to provide a significant advantage in terms of weight by using a composite plastic spring, rather than the steel power spring used in the state of the art.

Another object of the invention is to make contributions including resistance against vibration conditions, saving on energy and reducing the strains on the connecting bolts, thanks to the weight advantage achieved by using composite plastic spring.

Yet another object of the invention is to provide a lower production tolerance and to facilitate centering and positioning in the spring body.

And another object of the invention is to allow the use of disc springs either in series or in parallel connection only, or alternatively some of them in series connection while some in parallel connection.

### Description of the Drawings

The drawings for a better understanding of the spring brake actuator with a disc springs made of composite plastic which has been developed according to the invention, whereby the power spring is produced of composite plastic and with disc springs in spring brake actuators comprising a power spring and used in air brake systems which are present in heavy commercial vehicles such as buses, trucks, trailers, and tow trucks, are described below.

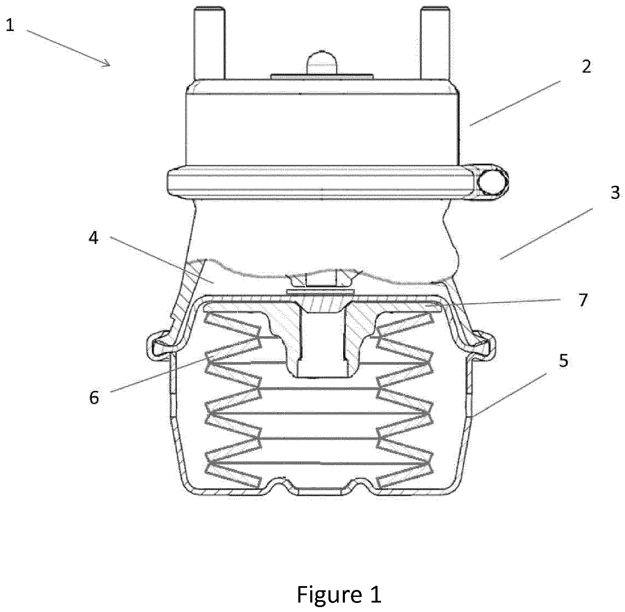

Fig. 1 - Overall View of the Spring Brake Actuator with a Disc Springs Made of Composite Plastic

### Description of the Part References

The parts/portions/components which are shown in the drawings illustrating the spring brake actuator with disc springs made of composite plastic which has been developed with the present invention for a better understanding of the invention are enumerated individually and the reference numbers corresponding thereto are given below.
**1.** A spring brake actuator with a disc springs made of composite plastic
**2.** Service Portion
**3.** Spring Portion
**4.** Spring Chamber
**5.** Spring Body
**6.** Disc Spring
**7.** Flange

### Detailed Description of the Invention

In this detailed description, the novelty according to the invention will only be described by way of illustrations in order for the subject matter to be better understood, without any limitations. Accordingly, a spring brake actuator (1) with disc springs made of composite plastic, wherein disc springs produced of composite plastic material are used and thus, the breakage and premature exposure of the power spring to corrosive effects are prevented, as well as the structural components constituting the spring brake actuator (1) with disc springs made of composite plastic are described.

With reference to Fig. 1, the overall view of a spring brake actuator (1) with adisc springs made of composite plastic which is used in air brake systems which are present in heavy commercial vehicles such as buses, trucks, trailers, and tow trucks is given. The spring brake actuator (1) with disc springs made of composite plastic which converts the stored energy obtained by using the compressed air stored in the brake systems of the vehicles into the force to actuate the brake, is generally characterized by comprising a service portion (2) which allows slowing down or stopping the vehicles while they are moving; a spring portion (3) which allows immobilizing the vehicles; a spring chamber (4) creating the braking force by compressing the power spring and discharging the air therein; a spring body (5) which is positioning the disc springs (6) in its; disc springs (6) compensating the spring and parking braking force; and a flange.

The composite plastic disc springs (3) is engaged in the spring portion of the spring brake actuator (1) with disc springs made of composite plastic. The dimensions and numbers of the disc springs (6) may be designed such that the desired force - stroke will be achieved. The disc springs (6) may be interconnected in series connection such that one of them will be in reverse and the other in straight direction, or alternatively in parallel connection in the same direction. The disc springs (6) which are interconnected in series or parallel connection are located between the spring body (5) and the flange (7); moreover, said disc springs (6) are produced of composite plastic or metal material.

In line with the explanations given above, the embodiment of the spring brake actuator (1) with disc springs made of composite plastic which is used in air brake systems of the towing vehicles including, trucks, trailers, etc. is realized as follows. While the heavy commercial vehicle is in driving position, the disc springs (6) which are made of composite plastic material are set by the effect of the compressed air in the spring chamber (4). (6). When the vehicle is desired to be taken to the parking position and to be immobilized, or in case of a leakage in the air system due to any reason, the compressed air in the spring chamber (4) is discharged, the force on the disc springs (6) which are produced of composite plastic material is released and braking occurs by the force of the disc springs (6). The vehicle is made to assume either parking position or immobile position by braking.

## Claims

1. A spring brake actuator (1) with disc springs made of composite plastic which is used in air brake systems which are present in heavy commercial vehicles such as buses, trucks, trailers, and tow trucks and which converts the stored energy obtained by using the compressed air stored in the brake systems of the vehicles into force to actuate the brake, **characterized in that it** comprises a (6) a spring body (5) which is positioning the disc springs (6) in its and a disc spring (6) compensating the spring and parking braking force.

2. A spring brake actuator (1) with disc springs made of composite plastic according to Claim 1, **characterized in that** the disc springs (6) are interconnected serially, in parallel connection, or some of them serially while some in parallel connection.

3. The spring brake actuator (1) with disc springs made of composite plastic according to Claim 2, **characterized in that** the disc springs (6) are located between the spring body (5) and the flange (7).

4. The spring brake actuator (1) with disc springs made of composite plastic according to Claim 2, **characterized in that** the dimensions, numbers, and the parallel or series connection of the disc springs (6) may be designed such that the desired force - stroke will be achieved.

5. The spring brake actuator (1) with disc springs made of composite plastic according to Claim 1, **characterized in that** the disc springs (6) are preferably produced of composite plastic material.

6. The spring brake actuator (1) with disc springs made of composite plastic according to Claim 1, **characterized in that** the disc springs (6) are preferably produced of metal material.
